# FASCICULE DE BREVET EUROPEEN

(11) **EP 2 406 155 B1**
(45) Date de publication et mention de la délivrance du brevet: **26.12.2012**
(21) Numéro de dépôt: 10715316.5
(22) Date de dépôt: 10.03.2010
(51) Int. Cl.: B65G 15/08, B65G 15/36

(54) **BANDE TRANSPORTEUSE SANS FIN DEFORMABLE TRANSVERSALEMENT, POUR DISPOSITIF CONVOYEUR**
QUER DEFORMIERBARES ENDLOSFÖRDERBAND FÜR EINEN FÖRDERER
TRANSVERSELY DEFORMABLE ENDLESS CONVEYOR BELT FOR A CONVEYOR DEVICE

(30) Priorité: 10.03.2009 FR 0901102
(43) Date de publication de la demande: 18.01.2012
(73) Titulaire: Liftvrac, 44310 St Colomban (FR)
(72) Inventeur: BOURSIER, Marcel, F-44310 Saint-Colomban (FR)
(74) Mandataire: Orsini, Fabienne
(86) Numéro de dépôt international: PCT/FR2010/050412
(87) Numéro de publication internationale: WO 2010/103238

(56) Documents cités:
- WO-A-90/03930
- DE-A1- 1 939 381
- GB-A- 461 162

## Description

La présente invention concerne le domaine général des installations de convoyage de produits par bandes transporteuses sans fin. Elle concerne plus particulièrement les bandes transporteuses sans fin dont le corps plan, au repos, est déformable transversalement dans une configuration tubulaire.

Les installations pour le convoyage de produits, en particulier de denrées alimentaires, peuvent être équipées d'au moins une bande transporteuse sans fin comprenant un corps réalisé en matériau souple qui intègre dans son épaisseur une pluralité d'organes de renfort longitudinaux (câbles, sangles plates, etc.) adaptés pour limiter ses possibilités d'allongement longitudinal.
Certaines de ces bandes transporteuses ont une configuration plane, au repos, qui est utile pour le chargement et la libération des produits ; elles sont de plus déformables transversalement dans une configuration tubulaire, ou au moins sensiblement tubulaire, pour former une sorte d'auge ou de tube adaptée en particulier pour le transport des produits selon une direction ascendante.

Pour un fonctionnement optimal, le corps de ces bandes transporteuses déformables est réalisé dans un matériau devant répondre à différents impératifs opposés : la face de dessus, destinée à recevoir les produits à convoyer, doit présenter un coefficient de frottement suffisamment élevé pour une adhérence optimale des produits, alors qu'à l'inverse, la face de dessous doit présenter un coefficient de frottement minimal pour limiter les phénomènes de frottement sur les moyens d'entraînement et de guidage du dispositif convoyeur associé.
Ces bandes doivent encore tolérer une certaine flexion, au moins lorsqu'elles sont conformées en auges ou tubes, de manière à pouvoir suivre des trajectoires non rectilignes (avec des angles ou des courbes) au sein du dispositif convoyeur.

Or, en pratique, le coefficient de frottement d'un matériau souple est notamment fonction de son niveau de dureté : un matériau plutôt dur présente généralement un coefficient de frottement réduit, et inversement, un matériau plutôt mou a normalement un coefficient de frottement élevé.
De même, un matériau plutôt dur présente une résistance plus élevée aux déformations, susceptible d'augmenter sa résistance à la flexion.

Pour ces raisons, il est classique de réaliser les bandes transporteuses dans un unique matériau souple, qui est choisi avec des caractéristiques de dureté présentant un compromis optimal entre l'ensemble des impératifs de fonctionnement.
Il est également connu du document WO-90/03930 qui décrit une bande selon le préambule de la revendication 1 de réaliser une bande transporteuse dont le corps comporte une couche supérieure formant la face de dessus, et une couche inférieure, formant la face de dessous, lesdites couches supérieure et inférieure étant réalisées dans deux matériaux élastomères différents.
Cependant, les bandes transporteuses ainsi obtenues ne permettent pas de respecter chaque contrainte d'une manière optimale.

La demanderesse a développé une nouvelle structure de bande transporteuse visant à répondre plus efficacement à l'ensemble de ces conditions, c'est-à-dire assurer un transport optimal des produits tout en générant des frottements réduits avec les moyens d'entraînement et de guidage du dispositif convoyeur associé.
Cette bande transporteuse a en plus l'intérêt de présenter une résistance à la flexion réduite, de manière à pouvoir suivre efficacement les trajectoires non rectilignes imposées par le dispositif convoyeur, cela sans risques de détérioration ou tout au moins en limitant ces risques.

A cet effet, la bande transporteuse sans fin selon l'invention comprend un corps qui est déformable transversalement entre - une configuration plane, au repos, et - une configuration tubulaire ou au moins sensiblement tubulaire, lequel corps intègre dans son épaisseur une pluralité d'organes de renfort longitudinaux adaptés pour limiter ses possibilités d'allongement longitudinal, et lequel corps est délimité par deux faces : - une face de dessus, destinée à recevoir le produit à transporter, et - une face de dessous, destinée à coopérer avec des moyens d'entraînement et de guidage constitutifs dudit dispositif convoyeur, lesdites faces de dessus et de dessous étant destinées à être orientées respectivement côtés intérieur et extérieur de la bande transporteuse dans ladite configuration tubulaire. Et cette bande transporteuse se caractérise par le fait que son corps se compose d'une couche supérieure, formant ladite face de dessus, dont au moins une partie de sa surface inférieure est associée à une couche inférieure, formant la face de dessous du corps. De plus, les deux couches en question sont réalisées dans deux matériaux élastomères différents, avec ladite couche inférieure réalisée dans un premier matériau élastomère dont la dureté est supérieure par rapport à celle du second matériau élastomère constitutif de ladite couche supérieure (on obtient ainsi un corps dont la face de dessus présente un coefficient de frottement supérieur par rapport à la face de dessous ; en fonctionnement, la face de dessous génère alors peu de frottement sur les moyens d'entraînement et de guidage constitutifs du dispositif convoyeur, et la face de dessus assure un entrainement efficace des produits). En outre, la couche inférieure comporte encore avantageusement, répartis sur toute sa longueur, une pluralité d'évidements d'assouplissement s'étendant chacun sur une partie au moins de son épaisseur, pour diminuer (voire éliminer) sa résistance aux déformations longitudinales (en traction et en compression), afin de réduire la résistance à la flexion ou au cintrage de la bande transporteuse qui est dans sa configuration tubulaire.

D'autres caractéristiques avantageuses de l'invention, pouvant être prises en combinaison ou isolément les unes des autres, sont développées ci-dessous :
- les évidements d'assouplissement de la couche inférieure s'étendent transversalement par rapport à l'axe longitudinal du corps de la bande transporteuse ; dans ce cas, ces évidements d'assouplissement ont de préférence une forme allongée rectiligne, et ils s'étendent selon un axe orienté perpendiculairement, ou au moins sensiblement perpendiculairement, par rapport à l'axe longitudinal du corps de ladite bande transporteuse ;
- les évidements d'assouplissement s'étendent dans toute l'épaisseur de la couche inférieure, et éventuellement sur une partie de l'épaisseur de la couche supérieure ;
- les organes de renfort sont noyés dans l'épaisseur de la couche inférieure et/ou se situent au niveau de l'interface entre les couches supérieure et inférieure ;
- les évidements d'assouplissement s'étendent en dehors de l'encombrement défini par les organes de renfort ;
- la bande transporteuse comprend deux groupes d'une pluralité d'organes de renfort longitudinaux parallèles, se situant chacun à 1/4, ou approximativement 1/4, de la largeur du corps de bande, cela par rapport à l'une des bordures dudit corps ; et la couche inférieure comporte sur sa longueur une pluralité de groupes de trois évidements d'assouplissement : (i) un évidement d'assouplissement central, situé entre les deux groupes d'organes de renfort longitudinaux, et (ii) deux évidements d'assouplissement extérieurs, s'étendant entre l'un des groupes d'organes de renfort et ladite bordure de corps à proximité (la couche inférieure forme alors une sorte d'ossature ou de maillage pour assurer un maintien optimal de la bande transporteuse en conformation tubulaire, limitant ainsi les risques d'affaissement) ;
- la couche supérieure comporte, au niveau de sa face inférieure, deux bandes latérales monobloc saillantes, s'étendant de part et d'autre de la couche inférieure ; et les évidements d'assouplissement transversaux s'étendent hors de l'encombrement desdites bandes latérales ou seulement sur une partie de leur largeur ;
- le rapport des épaisseurs entre les couches supérieure et inférieure est compris entre 0;3 et 2 (de préférence 0,7) ;
- la bande transporteuse comporte des plots en saillie réalisés monobloc dans la couche inférieure, qui servent au guidage et à l'entraînement de la bande, lesquels plots sont régulièrement répartis sur la face de dessous de la bande, les évidements d'assouplissement étant réalisés en dehors de l'encombrement transversal défini par lesdits plots monobloc ;
- la couche inférieure comporte encore des évidements longitudinaux, orientés parallèlement ou au moins sensiblement parallèlement à l'axe longitudinal du corps de bande, lesquels évidements sont ménagés dans l'épaisseur de ladite couche inférieure et s'ouvrent au niveau de la face inférieure dudit corps de bande, de manière à réduire la résistance de ladite couche inférieure à la déformation transversale, pour faciliter la mise en configuration tubulaire de la bande transporteuse.

L'invention sera encore illustrée, sans être aucunement limitée, par la description suivante d'une forme de réalisation particulière, donnée uniquement à titre d'exemple et représentée sur les dessins annexés dans lesquels :
- la figure 1 montre un tronçon de la bande transporteuse sans fin, selon une vue en perspective orientée du côté de sa face de dessous ;
- la figure 2 est une vue en élévation de la bande transporteuse sans fin de la figure 1, vue du côté de sa face de dessous ;
- la figure 3 est une vue en coupe, selon le plan de coupe transversal III-III de la figure 2 ;
- la figure 4 est quant à elle une vue selon un plan de coupe longitudinal IV-IV de la figure 2 ;
- la figure 5 montre la bande sans fin des figures 1 à 4, placée en configuration tubulaire (selon un plan de coupe V-V de l'installation illustrée sur la figure 6) ;
- la figure 6 est une vue de côté d'une installation de convoyage, en forme de convoyeur élévateur, mettant en oeuvre la bande transporteuse illustrée sur les figures 1 à 5.

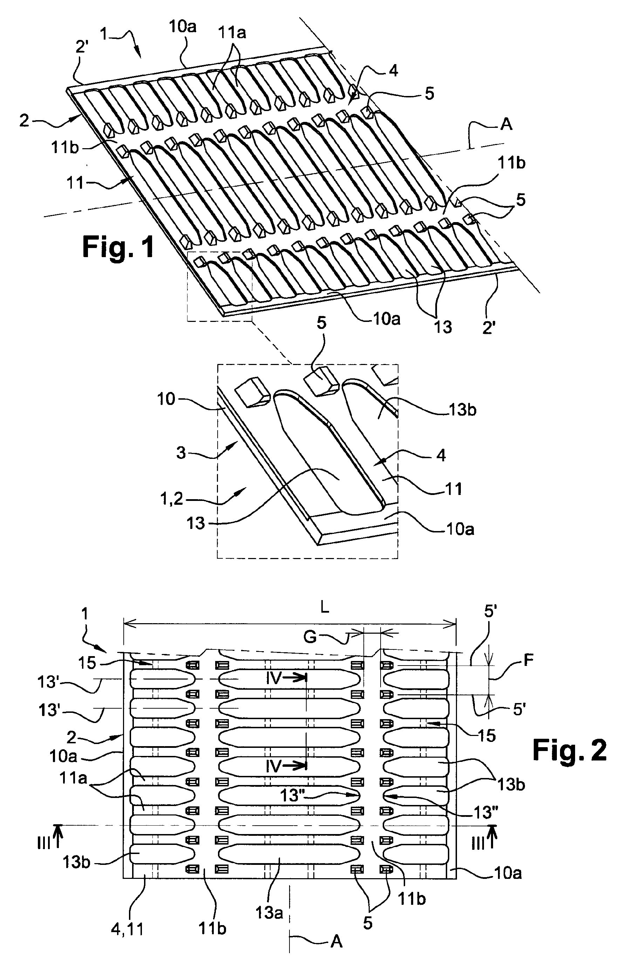

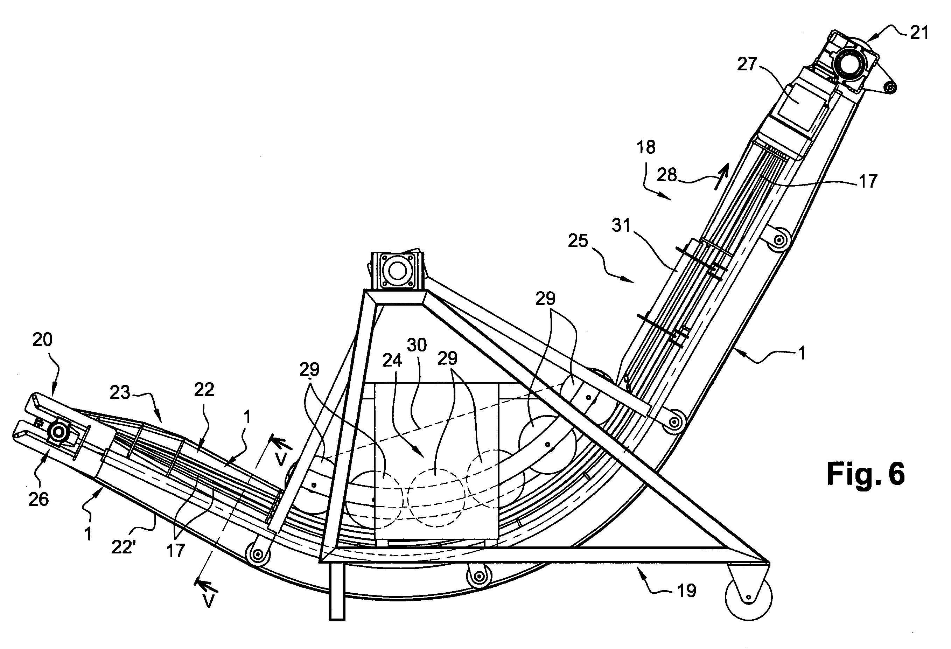

La bande transporteuse 1, illustrée sur les figures 1 à 4, est adaptée pour le transport de produits, notamment de denrées alimentaires.
Elle est destinée à équiper, par exemple, une installation de convoyage telle que décrite ci-après en relation avec la figure 6.

Cette bande transporteuse 1 comprend un corps plan 2, réalisé en matériau souple.

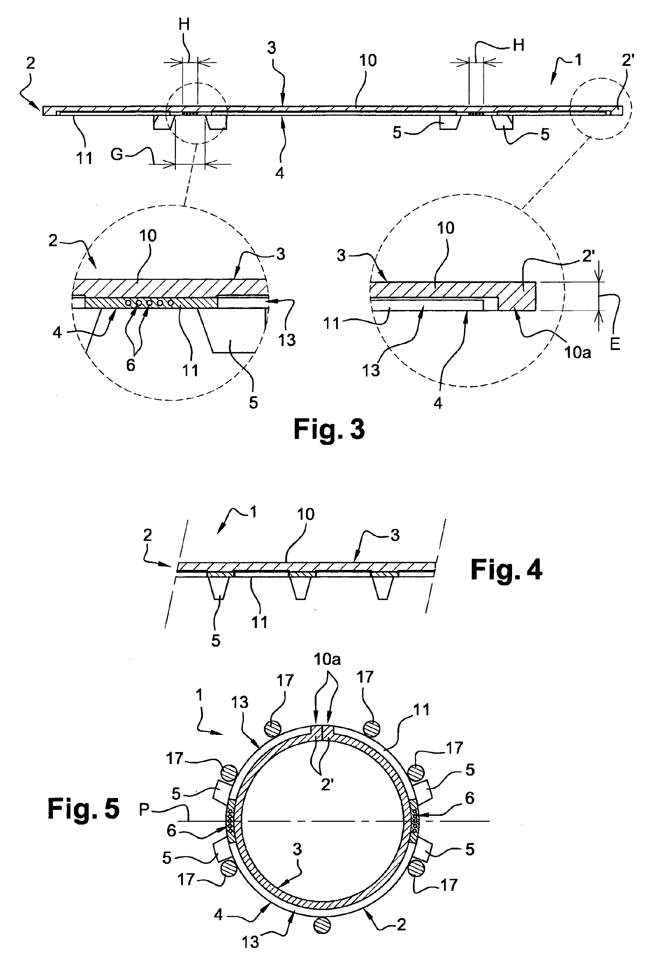

Ce corps plan 2, d'axe médian longitudinal de symétrie A, présente une section rectangulaire allongée. A titre indicatif, sa largeur L constante (figure 2) est ici comprise entre quelques centimètres et quelques dizaines de centimètres ; son épaisseur générale E (figure 3) est de l'ordre de quelques millimètres.

Ce corps de bande 2 présente deux faces opposées : une face de dessus 3 et une face de dessous 4.

La face de dessus 3 du corps de bande 2 est destinée à recevoir les produits à transporter. Elle est lisse et dépourvue de protubérances (figures 3 et 4).
Sa face de dessous 4 est destinée à coopérer avec des moyens de guidage et d'entraînement de l'installation de convoyage. Elle comporte pour cela notamment une pluralité de plots 5, qui sont notamment adaptés pour coopérer avec une structure de renvoi motorisée assurant l'entraînement de la bande transporteuse 1.

Les plots monobloc 5 sont répartis ici sur des lignes transversales 5', régulièrement espacées d'une distance F, par exemple de quelques centimètres (figure 2).
Comme illustré sur les figures 2 et 3, ces plots 5 sont au nombre de quatre sur chaque ligne transversale 5' ; et ils sont positionnés par paire, de manière symétrique par rapport à l'axe médian A du corps 2.
Chaque couple de plots 5 est approximativement centré sur la demi-largeur de bande 2. Au sein de chaque couple, les plots monobloc 5 sont espacés, l'un de l'autre, d'une distance G.

La bande transporteuse 1 comprend encore des organes de renfort longitudinaux 6, en forme de câbles ou de sangles plates, adaptés pour limiter ses possibilités d'allongement longitudinal (figure 3).
Ces organes de renfort 6, réalisés par exemple en fibres d'aramide ou fils d'acier, sont intégrés dans la masse lors de la fabrication de la bande 1, au niveau de sa fibre neutre.

Selon la présente invention, la structure de la bande transporteuse 1 est adaptée de sorte à assurer simultanément, d'une part, un entraînement efficace des produits transportés et, d'autre part, une coopération optimale par contact direct avec les moyens d'entraînement/guidage constitutifs de l'installation de convoyage.
Pour cela, le corps de bande 2 comporte en particulier une face de dessus 3 dont le coefficient de frottement est supérieur par rapport à celui de la face de dessous 4.

Pour assurer ces différences de coefficient, l'épaisseur du corps de bande 2 se compose ici de deux couches superposées, fixées l'une sur l'autre : une couche supérieure 10 formant la face de dessus 3, et dont au moins une partie de sa surface inférieure est associée à une couche inférieure 11 formant la face de dessous 4 du corps 2.

Ces deux couches 10, 11 sont réalisées dans des matériaux élastomères, différents l'un de l'autre : la couche inférieure 11 est réalisée dans un premier matériau élastomère dont la dureté est supérieure par rapport à celle du second matériau élastomère constituant la couche supérieure 10.
Les matériaux constitutifs de chacune de ces couches 10 et 11 peuvent être choisis à façon, en fonction notamment des coefficients de frottement recherchés.

Par exemple, la couche supérieure 10 présente une épaisseur comprise entre 2 et 5 mm ; elle est avantageusement réalisée dans un matériau plutôt mou, présentant un Shore de type A, compris entre 60 et 80 Shores A.
La couche inférieure 11 peut quant à elle avoir une épaisseur comprise entre 1 et 4 mm ; son matériau constitutif est avantageusement choisi parmi ceux considérés comme plutôt durs, présentant un Shore de type D, compris entre 40 et 75 Shores D.

Le corps de bande 2 est avantageusement fabriqué par une technique de co-extrusion ou de post-extrusion, à partir de matériaux élastomères de type polyuréthane.

Tel qu'illustré par la figure 3, les organes de renfort 6 sont noyés dans l'épaisseur de la couche inférieure 11, au milieu ou au moins approximativement au milieu de son épaisseur (c'est-à-dire encore au niveau de la fibre neutre du corps plan 2, comme abordé précédemment).

Ces organes de renfort 6 sont regroupés au niveau de deux zones de largeur H du corps plan 2 qui se situent au 1/4, ou approximativement au 1/4, de sa largeur L, de part et d'autre du plan médian A (c'est-à-dire approximativement centrées sur la demi-largeur du corps plan 2).
Chaque groupe d'organes de renfort 6 se situe ainsi encore à 1/4, ou approximativement à 1/4, de la largeur L du corps 2, cela par rapport à l'une des bordures 2' dudit corps 2.

Un organe de renfort 6 peut être présent sur chaque zone en question (en forme de câble ou de sangle plate). Si on utilise des câbles, on prévoit de préférence deux groupes d'une pluralité d'organes de renfort 6 (avantageusement entre 2 et 6 organes de renfort par groupe).

Ces groupes d'organes de renfort 6 sont chacun positionnés sur une zone étroite de la largeur du corps plan 2 ; la largeur H de cette zone est par exemple comprise entre 2 et 5 mm.

Sur la figure 3, on remarque encore que les groupes d'organes de renfort 6 sont positionnés chacun sur l'une des zones G du corps plan 2 située entre les plots 5, et qu'ils sont centrés sur cette zone G.
Les organes de renfort 6 consistent ici en des câbles, au nombre de cinq dans chaque groupe. Les câbles en question consistent avantageusement en des câbles de fibres d'aramide ayant une section dont le diamètre est compris entre 0,5 et 1,5 mm.

Par ailleurs, la couche inférieure 11 de la bande 1 est structurée de sorte à réduire, voir éliminer, sa résistance aux déformations longitudinales et aux contraintes (en compression et en traction) ; ou en d'autres termes, elle est structurée de sorte à assurer des caractéristiques d'élasticité accrues et apporter de la souplesse à cette couche inférieure 11.
Plus précisément, ce sont les parties non-renforcées de la couche inférieure 11, c'est-à-dire localisées en dehors de l'encombrement transversal des organes de renfort 6, qui ont avantageusement une élasticité et souplesse améliorées.
Cette caractéristique vise en particulier à réduire la résistance à la flexion, ou autrement dit au cintrage, de la bande transporteuse 1 au moins dans sa configuration tubulaire, ce qui est particulièrement utile lors d'un cheminement non-linéaire de cette bande transporteuse dans l'installation de convoyage.

A cet effet, comme illustré sur les figures 1 à 4, cette couche inférieure 11 présente une structure discontinue du fait de la présence d'une pluralité d'évidements d'assouplissement 13, convenablement agencés et conformés, réalisés par exemple par usinage.
Ces évidements 13 sont structurés pour limiter, voire éliminer, les déformations longitudinales et les contraintes de la couche inférieure 11 (en traction et en compression), dans les zones de contrainte générées lors du cintrage de la bande transporteuse 1 préalablement conformée en tube, autour d'un axe transversal passant par les deux groupes d'organes de renfort 6.

Les évidements d'assouplissement 13 correspondants s'étendent ici chacun dans toute l'épaisseur de la couche inférieure 11, et s'ouvrent au niveau de la face inférieure 4 du corps 2. Tel que représenté sur la figure 3, ces évidements 13 s'étendent également très légèrement dans l'épaisseur de la couche supérieure 10 (cette couche supérieure 10 constitue ici le fond de ces évidements 13).

Ces évidements 13 sont conformés et répartis de sorte que la couche inférieure 11 forme une sorte d'ossature ou de maillage composée de plusieurs bandes de matière : une pluralité de bandes transversales 11a régulièrement espacées, s'étendant sur toute la largeur du corps de bande 2 (perpendiculairement à son axe longitudinal A) et entrecoupées par deux bandes longitudinales 11b situées à distance l'une de l'autre (parallèlement à son axe longitudinal A).

Les bandes longitudinales 11b correspondantes intègrent les organes de renfort 6 ; elles se situent au 1/4 de sa largeur L, ou approximativement au 1/4, de part et d'autre du plan médian A (c'est-à-dire approximativement centrées sur la demi-largeur du corps plan 2).
Les plots 5 se situent au niveau des points d'intersection entre ces bandes transversales 11a et longitudinales 11b.
A titre indicatif, les bandes longitudinales 11b ont une largeur comprise 10 et 20 mm ; les bandes transversales 11a ont une largeur comprise entre 10 et 15 mm.

A cet effet, les évidements d'assouplissement 13 ont chacun une forme allongée et rectiligne, du type oblongue ; ils s'étendent transversalement par rapport à l'axe longitudinal A du corps de bande 2, en l'occurrence selon un axe orienté perpendiculairement par rapport à cet axe longitudinal A.

Ces évidements transversaux 13 sont ménagés sur seulement une partie de la largeur de la couche inférieure 11, en dehors de l'encombrement défini par les organes de renfort 6.

Ils sont répartis sur des lignes transversales 13' régulièrement espacées, délimitant entre eux les bandes transversales 11a (figure 2).
Chaque ligne transversale 13' comporte un groupe de trois évidements, séparés par les deux bandes longitudinales 11b, à savoir :
- un évidement central 13a, situé entre les deux bandes longitudinales 11b (c'est-à-dire encore entre les deux groupes d'organes de renfort longitudinaux 6), et
- deux évidements extérieurs 13b s'étendant entre l'une des bandes longitudinales 11b (ou l'un des groupes d'organes de renfort 6) et l'une des bordures de corps 2' à proximité.

Les évidements 13 se situent encore en dehors de l'encombrement transversal défini par les plots monobloc 5 ; ils se situent ainsi au niveau de l'espace longitudinal F séparant deux plots 5 juxtaposés longitudinalement.

Les évidements transversaux 13 se terminent également au plus près des organes de renfort 6, de manière à optimiser les caractéristiques de flexion et de cintrage de la bande transporteuse 1.
Du côté des organes de renfort 6, ces évidements 13 comportent ici une extrémité 13" en forme générale de V qui s'étend sur une partie de la largeur des bandes longitudinales 11b entre deux plots 5 juxtaposés longitudinalement.
A titre indicatif, la distance entre l'extrémité 13" d'un évidement transversal 13 et les organes de renfort 6 est avantageusement de quelques mm.

Tel que représenté sur les figures 1 à 3, la couche supérieure 10 comporte deux bandes latérales monobloc saillantes 10a, qui forment des prolongements s'étendant de part et d'autre de la couche inférieure 11.
Ces bandes latérales 10a ont pour fonction de concourir au maintien de la bande transporteuse 1, dans ses configurations plane et tubulaire ; elles assurent également une étanchéité optimale lorsqu'elles sont accolées l'une contre l'autre.
Elles recouvrent les chants latéraux de la couche inférieure 11 de la bande 1, et leur face inférieure s'étend dans le même plan général que la face inférieure 4 de ladite couche inférieure 11.
Les évidements transversaux extérieurs 13b empiètent une partie minime de la largeur de ses bandes latérales 10a.

D'autre part, la couche inférieure 11 comporte encore avantageusement des évidements longitudinaux 15, représentés schématiquement sur la figure 2 (en traits pointillés).
Ces évidements longitudinaux 15 sont orientés parallèlement ou au moins sensiblement parallèlement à l'axe longitudinal A du corps 2.
Ils sont ménagés dans l'épaisseur de la couche inférieure 11, au niveau des bandes transversales 11a, de manière à réduire la résistance de cette couche inférieure 11 à la déformation transversale. De plus, ils s'ouvrent au niveau de la face inférieure 4.
Cette caractéristique est utile, tout en étant optionnelle, pour faciliter la mise en configuration tubulaire de la bande transporteuse 1.

Du fait de sa souplesse transversale, la bande transporteuse 1 peut être conformée au moins en auge (par exemple selon une section au moins en forme générale de U) ; elle peut, de manière plus poussée, être mise en configuration transversale tubulaire ou pratiquement tubulaire, avec ses bords relevés 2' qui viennent s'accoler ou pratiquement s'accoler l'un contre l'autre, comme illustré sur la figure 5. Les deux bords longitudinaux 2' de la bande 1 sont relevés de manière identique pour obtenir une structure symétrique par rapport à un plan médian vertical.

Dans une telle configuration transversale tubulaire, les faces de dessus 3 et de dessous 4 présentent une conformation circulaire, et elles sont orientées respectivement du côté intérieur et extérieur du tube formé.

Les organes de renfort longitudinaux 6 sont positionnés sur le diamètre horizontal P de la section transversale du tube, ce qui permet de limiter au maximum les contraintes internes de la bande de transport 1. C'est en particulier le cas lorsque la bande en configuration tubulaire est cintrée de sorte à se déplacer le long de trajectoires non rectilignes (angle ou courbe), ceci dans un plan perpendiculaire aux axes des rouleaux d'extrémités de la structure de convoyage équipée.
De plus et comme indiqué ci-dessus, les évidements d'assouplissement 13 permettent de réduire les contraintes au niveau de la couche inférieure 11 dans le cadre de ces trajectoires non-rectilignes : d'une part, les contraintes de compression sont réduites pour la partie de couche inférieure 11 située au-dessus du plan P (du côté des bordures de bande 2') et orientée vers l'intérieur du cintrage, et d'autre part, les contraintes de traction/allongement sont réduites pour la partie de couche inférieure 11 située au-dessous du plan P (à l'opposé des bordures de bande 2') et venant à l'extérieur du cintrage.
Les caractéristiques de cintrage de la bande souple 1 correspondent alors sensiblement aux caractéristiques de la couche supérieure 10 en matériau plutôt mou, plus adaptée pour subir ces déformations longitudinales.

Toujours dans cette configuration tubulaire, la couche inférieure 11, formant ossature extérieure, concourt au maintien en volume de la bande transporteuse 1, et diminue ainsi ses risques d'affaissement.

Sur la figure 5, on a représenté cette mise en configuration transversale tubulaire de la bande de transport 1, maintenue au moyen d'organes de guidage longitudinaux 17 convenablement agencés (constitutifs de l'installation de convoyage).
Ces organes longitudinaux de guidage 17 peuvent consister en des fils métalliques à section ronde (comme illustré sur la figure 5) ; il peut aussi s'agir de rails ou de profilés en matière métallique ou plastique, par exemple en PEHD.
On remarque ici que certains organes de guidage 17 viennent prendre appui sur les côtés des plots monobloc 5, pour éviter le déplacement latéral (ou en rotation) de la bande sans fin 1, lorsqu'elle se déplace.

La couche inférieure 11 de la bande 1 vient cheminer par contact direct sur ces organes de guidage 17, par exemple par glissement.
Cette couche inférieure 11 et les plots monoblocs associés 5, réalisés en matériau rigide et à faible coefficient de frottement, génèrent des frottements limités ce qui réduit les risques de détérioration de la bande 1 et de l'installation associée.

Cette configuration transversale tubulaire peut être mise en oeuvre par exemple dans le cadre d'un convoyeur élévateur pour optimiser le transport des produits, en particulier au niveau du ou des tronçons ascendants.

Un exemple d'un tel convoyeur élévateur 18 est représenté sur la figure 6.

Ce convoyeur élévateur 18 comprend un châssis 19 équipé de la bande transporteuse sans fin 1 qui s'enroule, en amont, autour d'une structure de renvoi inférieure 20 et, en aval, autour d'une structure de renvoi supérieure 21, toutes deux en forme de rouleaux d'extrémité.

La bande sans fin 1 comporte - un brin supérieur 22, dont la face supérieure 3 constitue la surface de transport des produits, et - un brin inférieur 22', formant brin retour.

Le brin supérieur 22 de la bande sans fin 1 est guidé par le châssis 19 de sorte à définir, partant du rouleau amont 20, successivement : - un tronçon rectiligne de chargement 23 pour les produits transportés, - un tronçon courbe concave 24, - un tronçon ascendant rectiligne 25 qui aboutit au rouleau d'extrémité aval 21.
Comme abordé dessus, la structure particulière de la bande convoyeuse 1 permet son cintrage efficace au niveau du tronçon concave 24, cela avec des contraintes réduites.

Le convoyeur élévateur 18 comporte des moyens classiques 26 qui permettent de mettre en tension ou de détendre la bande sans fin 1, ménagés ici au niveau du rouleau amont 20.

Le rouleau aval 21 est associé à une motorisation 27 qui permet sa mise en rotation afin d'assurer l'entraînement de la bande sans fin 1 dans le sens de la flèche directionnelle 28.

Au niveau des rouleaux d'extrémités 20 et 21, la bande sans fin 1 présente une configuration transversale plane ou sensiblement plane, tel que représenté sur la figure 3.
En revanche, entre ses extrémités amont 20 et aval 21, le convoyeur élévateur 18 est structuré pour conformer la bande transporteuse 1 en configuration recourbée et plus particulièrement en configuration tubulaire, au moins sur une partie du tronçon ascendant 25 (et de préférence sur une partie au moins du tronçon courbe 24 et sur la majeure partie de la longueur du tronçon ascendant 25), mettant alors à profit ses caractéristiques de souplesse transversale, afin d'optimiser le transport ascendant des produits.

Au niveau du tronçon de chargement 23, la bande sans fin 1 présente une configuration plane, adaptée pour permettre la dépose des produits, par exemple par l'intermédiaire d'une trémie (non représentée).
Ce tronçon de chargement 23 peut être structuré en pente descendante, comme illustré sur la figure 6 ; dans des variantes de réalisation, la pente descendante correspondante peut être moins prononcée. Le tronçon de chargement 23 peut aussi s'étendre horizontalement ou en légère pente ascendante, cela en particulier en fonction de la nature des produits à transporter.

La mise en configuration recourbée de la bande sans fin 1, avec ses bordures longitudinales 2' relevées l'une vers l'autre, est initiée au niveau du tronçon de chargement 23, ou juste à la suite de celui-ci, au moyen des organes longitudinaux de guidage 17 précités, qui viennent prendre appui contre la face de dessous 4 de ladite bande sans fin 1 (figure 5).

Dans le mode de réalisation illustré, la configuration tubulaire de la bande sans fin 1 est obtenue approximativement à la fin du tronçon de chargement 23, c'est-à-dire approximativement à l'entrée du tronçon courbe 24, et elle s'étend le plus haut possible sur le tronçon ascendant 25, c'est-à-dire juste avant l'extrémité aval 21. La section de bande illustrée sur la figure 5 peut correspondre à la coupe selon le plan V-V de la figure 6.
En amont de la configuration tubulaire complète, les organes de guidage 17 déforment progressivement la bande sans fin 1 pour passer de la configuration transversale plane (au niveau du rouleau d'extrémité 20) vers la configuration tubulaire (en préservant un espace adapté pour le chargement des produits).
En aval de la configuration tubulaire complète, les organes de guidage 17 déforment progressivement la bande sans fin 1 pour passer de ladite configuration tubulaire vers une configuration plane (au niveau du rouleau d'extrémité 21).

La configuration tubulaire de convoyage peut être obtenue par les organes de guidage 17 seuls.
Néanmoins, de préférence, ces organes de guidage 17 sont associés à des moyens complémentaires (schématisés et repérés 29, 30 et 31 sur la figure 6), adaptés pour maintenir les bords longitudinaux 2' de la bande sans fin 1 accolés ou pratiquement accolés, afin d'obtenir ou de renforcer l'étanchéité au niveau de la génératrice supérieure du tube obtenu.
Touts ces moyens de guidage coopèrent avec la face de dessous 4 de la bande convoyeuse 1 qui a l'intérêt de présenter un coefficient de frottement réduit.

Au niveau du tronçon courbe 24 du convoyeur élévateur 18, ces moyens complémentaires comprennent ici un ensemble de galets 29 montés libres en rotation et juxtaposés sur une ligne en arc de cercle, au-dessus du tube de convoyage 1. Ces galets 29 ont une surface active à section en arc de cercle concave, complémentaires de la section tubulaire de bande ; ils sont répartis les uns à la suite des autres de sorte à venir en contact avec la partie tubulaire de bande sans fin 1, au niveau de la ligne de jonction de ses bords accolés ou pratiquement accolés.
Pour obtenir un appui continu et optimiser l'étanchéité, la juxtaposition de galets 29 est avantageusement associée à une bande sans fin souple 30 qui les ceinture. Le brin supérieur (non actif) de cette bande sans fin 30 apparaît sur la figure 6. Son brin inférieur vient s'appliquer en continu sur le tube de convoyage 1 pour assurer l'étanchéité recherchée. Il avance à la même vitesse ou sensiblement à la même vitesse que le tube de convoyage 1, entraîné par ce dernier.

De manière alternative, les moyens de guidage au niveau du tronçon courbe 24 pourraient être uniquement du type glissière(s).

Au niveau du tronçon ascendant rectiligne 25 du convoyeur élévateur 18, les moyens complémentaires de maintien des bords longitudinaux de la bande sans fin accolés ou pratiquement accolés, consistent en des patins d'appui fixe 31, dont la surface active est à section en arc de cercle concave, complémentaire de la section supérieure du tube de convoyage.

Dans les zones de présence des moyens complémentaires 29-30, 31 qui viennent appuyer sur la partie supérieure du tube de convoyage 1, les organes de guidage longitudinaux 17 peuvent être prévus uniquement pour guider la partie inférieure et éventuellement les parties latérales dudit tube de convoyage 1.

Au niveau du tronçon courbe 24 du convoyeur élévateur, on peut encore prévoir des moyens en forme de rails d'appui latéraux et/ou en forme d'organe(s) de traction inférieur(s), adaptés pour éviter l'écrasement sur lui-même du tube de convoyage 1.
Cet écrasement est aussi limité ou évité, par l'ossature périphérique créée par la couche inférieure 11 « dure » du corps de bande 2.

En fonctionnement, la bande transporteuse sans fin 1 étant entraînée par le tambour motorisé 21, les produits peuvent être déposés sur le tronçon de chargement 23. Ils sont ensuite canalisés progressivement dans la partie tubulaire du tronçon courbe 24 ; les caractéristiques structurelles de la couche inférieure 11 sont mises à profit de manière à obtenir un cintrage optimal de la bande 1 en configuration tubulaire. Les produits s'accumulent dans la partie amont du tronçon ascendant 25 et ils sont transportés vers le haut jusqu'à la partie aval du convoyeur, sous l'effet du coefficient élevé de la face de dessus 3 de la bande 1, du mouvement de cette bande 1, de sa conformation en tube et de la poussée des produits amont. Arrivant au niveau de la structure de renvoi aval 21, les produits sont récupérés par toute structure adaptée, tel qu'une trémie de réception, un convoyeur de transport, une goulotte de sortie ou autre.

Une telle structure de convoyeur élévateur s'avère très simple et particulièrement efficace ; la pente du tronçon ascendant 25 peut atteindre 60, 80, voire même 100 %, ce qui lui confère des caractéristiques de compacité très intéressantes. La bande sans fin 1 ayant une surface supérieure 3 lisse, elle peut facilement être nettoyée, par exemple par des moyens de raclage ménagés au niveau d'une partie à configuration plane (par exemple au niveau de ses extrémités ou de son brin inférieur retour 22').
En outre, le positionnement particulier des organes de renfort 6 et la structure particulière de la couche inférieure 11 évitent toute contrainte interne sur la structure de la bande sans fin configurée en tube, en particulier au niveau du tronçon courbe 24.

Ce genre de convoyeur élévateur peut efficacement être utilisé pour le transfert vers le haut de produits en vrac se présentant en portions, morceaux, languettes, grains, poudre, etc. Il trouve une application en particulier pour les produits alimentaires tels que de la viande en morceaux, du fromage ou légumes râpés, des poissons entiers ou en morceaux.

## Revendications

1. Bande transporteuse sans fin pour dispositif convoyeur (18), laquelle bande transporteuse (1) comprend un corps (2) qui est déformable transversalement entre - une configuration plane, au repos, et - une configuration tubulaire ou au moins sensiblement tubulaire, lequel corps (2) intègre dans son épaisseur une pluralité d'organes de renfort longitudinaux (6) adaptés pour limiter ses possibilités d'allongement longitudinal, et lequel corps (2) est délimité par deux faces : - une face de dessus (3), destinée à recevoir le produit à transporter, et - une face de dessous (4), destinée à coopérer avec des moyens d'entraînement et de guidage (17, 29, 30, 31) constitutifs dudit dispositif convoyeur (18), lesdites faces de dessus (3) et de dessous (4) étant destinées à être orientées respectivement côtés intérieur et extérieur de la bande transporteuse (1) dans ladite configuration tubulaire, ledit corps (2) se composant d'une couche supérieure (10), formant ladite face de dessus (3), dont au moins une partie de sa surface inférieure est associée à une couche inférieure (11), formant ladite face de dessous de corps (4), et lesdites deux couches (10, 11) étant réalisées dans deux matériaux élastomères différents, **caractérisée en ce que** ladite couche inférieure (11) est réalisée dans un premier matériau élastomère dont la dureté est supérieure par rapport à celle du second matériau élastomère constitutif de ladite couche supérieure (10), et **en ce que** ladite couche inférieure (11) comporte, répartis sur toute sa longueur, une pluralité d'évidements d'assouplissement (13) s'étendant chacun sur une partie au moins de son épaisseur, pour diminuer sa résistance aux déformations longitudinales afin de réduire la résistance au cintrage de ladite bande transporteuse (1) dans sa configuration tubulaire.

2. Bande transporteuse sans fin selon la revendication 1, **caractérisée en ce que** les évidements d'assouplissement (13) de la couche inférieure (11) s'étendent transversalement par rapport à l'axe longitudinal (A) du corps (2) de ladite bande transporteuse (1).

3. Bande transporteuse sans fin selon la revendication 2, **caractérisée en ce que** les évidements d'assouplissement (13) de la couche inférieure (11) ont une forme allongée rectiligne, et s'étendent selon un axe (13') orienté perpendiculairement, ou au moins sensiblement perpendiculairement, par rapport à l'axe longitudinal (A) du corps (2) de ladite bande transporteuse (1).

4. Bande transporteuse sans fin selon l'une quelconque des revendications 1 à 3, **caractérisée en ce que** les évidements d'assouplissement (13) s'étendent dans toute l'épaisseur de la couche inférieure (11), et éventuellement sur une partie de l'épaisseur de la couche supérieure (10).

5. Bande transporteuse sans fin selon l'une quelconque des revendications 1 à 4, **caractérisée en ce que** les organes de renfort (6) sont noyés dans l'épaisseur de la couche inférieure (11) et/ou se situent au niveau de l'interface entre les couches supérieure (10) et inférieure (11).

6. Bande transporteuse sans fin selon l'une quelconque des revendications 1 à 5, **caractérisée en ce que** les évidements d'assouplissement (13) s'étendent en dehors de l'encombrement défini par les organes de renfort (6).

7. Bande transporteuse sans fin selon l'une quelconque des revendications 1 à 6, **caractérisée en ce qu'**elle comprend deux groupes d'une pluralité d'organes de renfort (6) longitudinaux parallèles, se situant chacun à 1/4, ou approximativement 1/4, de la largeur (L) du corps (2), cela par rapport à l'une des bordures (2') dudit corps (2), et **en ce que** la couche inférieure (11) comporte sur sa longueur une pluralité de groupes de trois évidements d'assouplissement: - un évidement d'assouplissement central (13a), situé entre les deux groupes d'organes de renfort longitudinaux (6), et - deux évidements d'assouplissement extérieurs (13b), s'étendant entre l'un des groupes d'organes de renfort (6) et ladite bordure de corps (2') à proximité.

8. Bande transporteuse sans fin selon l'une quelconque des revendications 1 à 7, **caractérisée en ce que** la couche supérieure (10) comporte, au niveau de sa face inférieure, deux bandes latérales monobloc saillantes (10a), s'étendant de part et d'autre de la couche inférieure (11), et **en ce que** les évidements d'assouplissement transversaux (13) s'étendent hors de l'encombrement desdites bandes latérales (10a) ou seulement sur une partie de leur largeur.

9. Bande transporteuse sans fin selon l'une quelconque des revendications 1 à 8, **caractérisée en ce qu'**elle comporte des plots (5) en saillie réalisés monobloc dans la couche inférieure (11), lesquels plots (5) sont régulièrement répartis sur la face de dessous (4), et **en ce que** les évidements d'assouplissement (13) sont réalisés en dehors de l'encombrement transversal défini par lesdits plots monobloc (5).

10. Bande transporteuse sans fin selon l'une quelconque des revendications 1 à 9, **caractérisée en ce que** la couche inférieure (11) comporte encore des évidements longitudinaux (15), orientés parallèlement ou au moins sensiblement parallèlement à l'axe longitudinal (A) du corps (2), lesquels évidements (15) sont ménagés dans l'épaisseur de ladite couche inférieure (11) et s'ouvrent au niveau de ladite face inférieure (4) de corps (2), de manière à réduire la résistance de ladite couche inférieure (11) à la déformation transversale pour faciliter la mise en configuration tubulaire de ladite bande transporteuse (1).

## Claims

1. Endless conveyor belt for a conveying device (18), which conveyor belt (1) comprises a body (2) that can be deformed transversely between - a flat configuration, at rest, and - a tubular or at least substantially tubular configuration, which body (2) incorporates in its thickness a plurality of longitudinal reinforcing members (6) suitable for limiting its ability to stretch longitudinally, and which body (2) is delimited by two faces: - one top face (3) designed to receive the product to be conveyed, and - one bottom face (4) designed to interact with driving an guiding means (17, 29, 30, 31) constituting said conveying device (18), said top face (3) and bottom face (4) being designed to be oriented respectively toward the inside and the outside of the conveyor belt (1) in said tubular configuration, said body (2) comprising an upper layer (10) forming said top face (3), in which at least a portion of its lower surface is associated with a lower layer (11) forming said bottom body face (4), and said two layers (10, 11) being made of two different elastomer materials, **characterized in that** said lower layer (11) is made of a first elastomer material the hardness of which is greater than that of the second elastomer material constituting said upper layer (10), and **in that** said lower layer (11) comprises, distributed over the whole of its length, a plurality of softening recesses (13) each extending over at least a portion of its thickness, in order to reduce its resistance to the longitudinal deformations in order to reduce the bending resistance of said conveyor belt (1) in its tubular configuration.

2. Endless conveyor belt according to claim 1, **characterized in that** the softening recesses (13) of the lower layer (11) extend transversely relative to the longitudinal axis (A) of the body (2) of said conveyor belt (1).

3. Endless conveyor belt according to claim 2, **characterized in that** the softening recesses (13) of the lower layer (11) have a rectilinear elongate and extend along an axis (13') oriented perpendicularly, or at least substantially perpendicularly, to the longitudinal axis (A) of the body (2) of said conveyor belt (1).

4. Endless conveyor belt according to any one of claims 1 to 3, **characterized in that** the softening recesses (13) extend into the whole thickness of the lower layer (11), and optionally over a portion of the thickness of the upper layer (10).

5. Endless conveyor belt according to any one of claims 1 to 4, **characterized in that** the reinforcing members (6) are embedded in the thickness of the lower layer (11) and/or are situated at the interface between the upper layer (10) and lower layer (11).

6. Endless conveyor belt according to any one of claims 1 to 5, **characterized in that** the softening recesses (13) extend beyond the space occupied by the reinforcing members (6).

7. Endless conveyor belt according to any one of claims 1 to 6, **characterized in that** it comprises two groups of a plurality of parallel longitudinal reinforcing member (6), each being situated at 1/4, or approximately 1/4, of the width (L) of the body (2), relative to one of the edges (2') of said body (2), and **in that** the lower layer (11) comprises, over its length, a plurality of groups of three softening recesses: - one central softening recess (13a), situated between the two groups of longitudinal reinforcing member (6), and - two outer softening recesses (13b), extending between one of the groups of reinforcing members (6) and said body edge (2') nearby.

8. Endless conveyor belt according to any one of claims 1 to 7, **characterized in that** the upper layer (10) comprises, on its lower face, two protruding one-piece lateral strips (10a), extending on either side of the lower layer (11), and **in that** the transverse softening recesses (13) extend beyond the space occupied by said lateral strips (10a) or only over a portion of their width.

9. Endless conveyor belt according to any one of claims 1 to 8, **characterized in that** it comprises protruding studs (5) made in one piece in the lower layer (11), which studs (5) are evenly distributed over the bottom face (4), and **in that** the softening recesses (13) are made beyond the transverse space occupied by said one-piece studs (5).

10. Endless conveyor belt according to any one of claims 1 to 9, **characterized in that** the lower layer (11) also comprises longitudinal recesses (15), oriented parallel to or at least substantially parallel to the longitudinal axis (A) of the body (2), which recesses (15) are made in the thickness of said lower layer (11) and open at said lower face (4) of the body (2), so as to reduce the resistance of said lower layer (11) to the transverse déformation in order to k it easier to place said conveyor belt (1) in tubular configuration.

## Patentansprüche

1. Endlosförderband für einen Förderer (18), wobei das Förderband (1) einen Körper (2) umfasst, der quer zwischen -einer flachen Ausführung, in Ruhe, und -einer röhrenförmigen oder zumindest röhrenförmigen Ausführung verformbar ist, wobei der Körper (2) in seiner Dicke eine Vielzahl von Längsverstärkungselementen (6) umfasst, die dazu vorgesehen sind, seine Möglichkeiten der Längsdehnung zu begrenzen, und wobei der Körper (2) von zwei Seiten begrenzt ist: -einer Oberseite (3), die dazu bestimmt ist, das zu befördernde Produkt aufzunehmen, und -einer Unterseite (4), die dazu bestimmt ist, mit Antriebs- und Führungsmitteln (17, 29, 30, 31) zusammenzuwirken, die Bestandteil des Förderers (18) sind, wobei die Oberseite (3) und die Unterseite (4) dazu bestimmt sind, zur Innenseite bzw. Außenseite des Förderbandes (1) in der röhrenförmigen Ausführung ausgerichtet zu sein, wobei der Körper (2) aus einer oberen Schicht (10), die die Oberseite (3) bildet, von der mindestens ein Teil ihrer Innenfläche mit einer unteren Schicht (11) verbunden ist, die die Unterseite des Körpers (4) bildet, besteht, und wobei die zwei Schichten (10, 11) aus zwei unterschiedlichen Elastomermaterialien hergestellt sind, **dadurch gekennzeichnet, dass** die untere Schicht (11) aus einem ersten Elastomermaterial hergestellt ist, dessen Härte größer als jene des zweiten Elastomermaterials ist, aus dem die obere Schicht (10) besteht, und dass die untere Schicht (11) über ihre gesamte Länge verteilt eine Vielzahl von Ausnehmungen zum Geschmeidigmachen (13) umfasst, die sich jeweils auf mindestens einem Teil ihrer Dicke erstrecken, um ihre Widerstandsfähigkeit gegen Längsverformungen zu verringern, um die Biegefestigkeit des Förderbandes (1) in seiner röhrenförmigen Ausführung zu verringern.

2. Endlosförderband nach Anspruch 1, **dadurch gekennzeichnet, dass** sich die Ausnehmungen (13) zum Geschmeidigmachen der unteren Schicht (11) quer zur Längsachse (A) des Körpers (2) des Förderbandes (1) erstrecken.

3. Endlosförderband nach Anspruch 2, **dadurch gekennzeichnet, dass** die Ausnehmungen (13) zum Geschmeidigmachen der unteren Schicht (11) eine gerade längliche Form haben und sich entlang einer senkrecht oder im Wesentlichen senkrecht zur Längsachse (A) des Körpers (2) des Förderbandes (1) ausgerichteten Achse (13') erstrecken.

4. Endlosförderband nach einem der Ansprüche 1 bis 3, **dadurch gekennzeichnet, dass** sich die Ausnehmungen (13) zum Geschmeidigmachen über die gesamte Dicke der unteren Schicht (11) und eventuell auf einem Weil der Dicke der oberen Schicht (10) erstrecken.

5. Endlosförderband nach einem der Ansprüche 1 bis 4, **dadurch gekennzeichnet, dass** die Verstärkungselemente (6) in die Dicke der unteren Schicht (11) eingelassen sind und/oder sich im Bereich der Fläche zwischen der oberen (10) und der unteren Schicht (11) befinden.

6. Endlosförderband nach einem der Ansprüche 1 bis 5, **dadurch gekennzeichnet, dass** sich die Ausnehmungen (13) zum Geschmeidigmachen außerhalb des durch die Verstärkungselemente (6) definierten Platzbedarfs erstrecken.

7. Endlosförderband nach einem der Ansprüche 1 bis 6, **dadurch gekennzeichnet, dass** es zwei Gruppen einer Vielzahl vorn parallelen länglichen Verstärkungselementen (6) umfasst, die sich jeweils auf ¼ oder annähernd ¼ der Breite (L) des Körpers (2) befinden, und zwar in Bezug zu einem der Ränder (2') des Körpers (2), und dass die untere Schicht (11) auf ihrer Länge eine Vielzahl vorn Gruppen von drei Ausnehmungen zum Geschmeidigmachen umfasst- -eine zentrale Ausnehmung (13a) zum Geschmeidigmachen, die sich zwischen den beiden Gruppen vorn Längsverstärkungselementen (6) befindet, und -zwei äußere Ausnehmungen (13b) zum Geschmeidigmachen, die sich zwischen einer der Gruppen von Verstärkungselementen (6) und dem Rand des Körpers (2') in der Nähe erstrecken.

8. Endlosförderband nach einem der Ansprüche 1 bis 7, **dadurch gekennzeichnet, dass** die obere Schicht (10) im Bereich ihrer Unterseite zwei überragende einstückige Seitenstreifen (10a) umfasst, die sich beiderseits der unteren Schacht (11) erstrecken, und dass sich die Querausnehmungen (13) zum Geschmeidigmachen über den Platzbedarf der Seitenstreifen (10a) hinaus oder nur auf einem Teil ihrer Breite erstrecken.

9. Endlosförderband nach einem der Ansprüche 1 bis 8, **dadurch gekennzeichnet, dass** es vorspringende Klötze (5) umfasst, die einstückig in der unteren Schicht (11) ausgeführt sind, wobei diese Klötze (5) regelmäßig auf der Unterseite (4) verteilt sind, und dass die Ausnehmungen (13) zum Geschmeidigmachen außerhalb des Querplatzbedarfs, der durch die einstückigen Klötze (5) definiert ist, ausgeführt sind.

10. Endlosförderband nach einem der Ansprüche 1 bis 9, **dadurch gekennzeichnet, dass** die untere Schicht (11) ferner Längsausnehmungen (15) umfasst, die parallel oder zumindest im Wesentlichen parallel zur Längsachse (A) des Körpers (2) aufgerichtet sind, wobei diese Ausnehmungen (15) in der Dicke der unteren Schicht (11) vorgegehen sind und sich im Bereich der Hunterseite (4) des Körpers (2) öffnen, um den Widerstand der unteren Schicht (11) gegen die Querverformung zu verringern, um das Förderband (1) leichter in die röhrenförmige Ausführung bringen zu können.
